# EUROPEAN PATENT APPLICATION

(11) **EP 2 141 635 A1**
(43) Date of publication of application: **06.01.2010**
(21) Application number: 08159343.6
(22) Date of filing: 30.06.2008
(51) Int. Cl.: G06K 19/067, G06K 19/07, G06K 19/077, G01S 1/68, G01S 13/00, G08B 1/08, H01P 5/00

(54) **A radio frequency tag**

(71) Applicant: Nederlandse Organisatie voor Toegepast- Natuurwetenschappelijk Onderzoek TNO, 2628 VK Delft (NL)
(72) Inventor: Hilhorst, Maximus Andreas, 6741 DR Lunteren (NL); Doodeman, Gerardus Johannes Nicolaas, 5501 DM Veldhoven (NL)
(74) Representative: Hatzmann, Martin

(57) **Abstract**

The invention relates to a radio frequency tag. The tag comprises a receiver for receiving radio frequency waves having an amplitude spectrum provided with a first frequency component and a second frequency component. The tag also comprises a converter associated with the receiver for generating a signal having a frequency component at the frequency difference between the first frequency and the second frequency. In addition, the tag comprises a signal circuit for processing the generated signal and a coupler for forwarding the generated signal from the receiver towards the signal circuit.

## Description

The invention relates to a radio frequency tag, comprising a receiver for receiving radio frequency waves.

Radio frequency tags are known for providing a response signal upon interrogating with radio waves. The response signal may depend on a physical parameter to be sensed, e.g. a local pressure, thus enabling a wireless, optionally passive sensor.

However, for providing an accurate measurement, it is desired that an accurately known frequency is generated in the tag. In the prior art, tags are known that are arranged for responding at the same frequency of the interrogating waves. However, this is not efficient from an energetic point of view. Known tags that are arranged for processing signals at a predetermined frequency are complicated due to a mismatch of electric components that has be compensated.

It is an object of the invention to provide a radio frequency tag, wherein the disadvantage identified above is reduced. In particular, the invention aims at obtaining a radio frequency tag wherein a response signal can be processed at an accurately predetermined frequency without employing a complex design. Thereto, according to the invention, the receiver of the tag comprises a receiver for receiving radio frequency waves having an amplitude spectrum provided with a first frequency component and a second frequency component; further, the tag according to the invention comprises a converter associated with the receiver for generating a signal having a frequency component at the frequency difference between the first frequency and the second frequency; a signal circuit for processing the generated signal; and a coupler for forwarding the generated signal from the receiver towards the signal circuit.

By generating the difference frequency component and forwarding the generated signal to the signal circuit an accurately known frequency component is available in the tag without using a complex design. Advantageously, the requirements for accurately generating the desired frequency are now applied to an interrogator transmitter interrogating the tag. Therefore, the tag can be realized in a simple, cheap way. Since the convertor can be implemented as a single passive component or as a number of passive components, the tag can be manufactured as a passive tag, thereby making the tag even less expensive.

Advantageously, the generated signal at the desired difference frequency can thus be provided with sufficient energy, since the energy is converted from another frequency band, thus rendering a sensing operation more accurate. Further, in principle, the generated signal does not interfere with the interrogating signal or harmonics thereof, if the frequencies are chosen properly, when the generated signal is transmitted by the tag.

Other advantageous embodiments according to the invention are described in the following claims.

By way of example only, embodiments of the present invention will now be described with reference to the accompanying figures in which
Fig. 1 shows a schematic view of a first embodiment of a radio frequency tag according to the invention;
Fig. 2 shows an amplitude spectrum of signals;
Fig. 3 shows a voltage current curve of the diode in Figure 1;
Fig. 4 shows a schematic view of a second embodiment of a radio frequency tag according to the invention;
Fig. 5 shows a schematic view of a third embodiment of a radio frequency tag according to the invention;
Fig. 6 shows a schematic view of a fourth embodiment of a radio frequency tag according to the invention; and
Fig. 7 shows a schematic view of a fifth embodiment of a radio frequency tag according to the invention.

It is noted that the figures shows merely preferred embodiments according to the invention. In the figures, the same reference numbers refer to equal or corresponding parts.

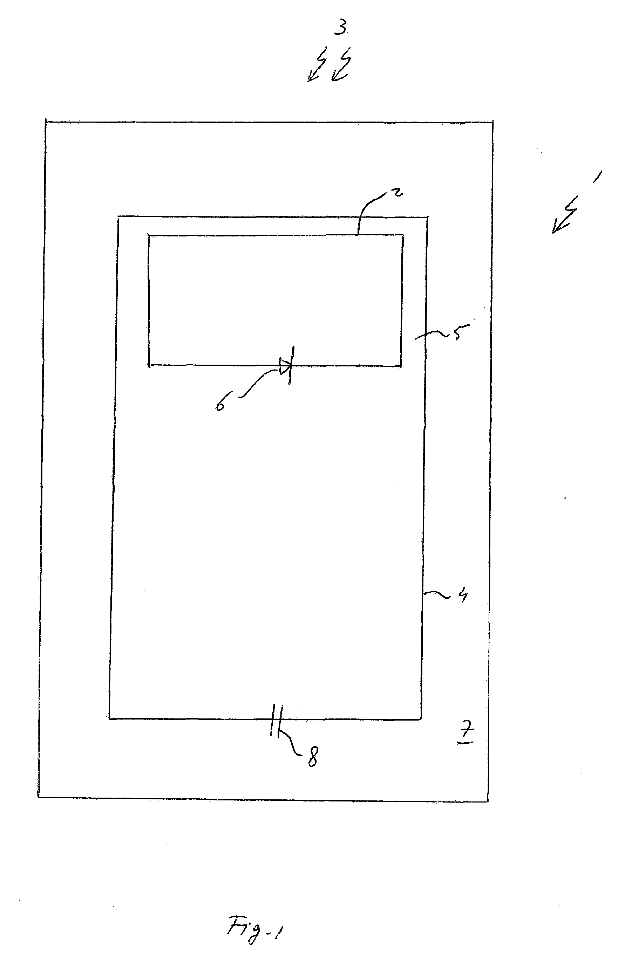

Figure 1 shows a first embodiment of a radio frequency tag 1 according to the invention. The tag 1 comprises a receiver 2 for receiving incoming radio waves 3. The tag 1 also comprises a signal circuit 4 and a coupler 5 for forwarding a signal from the receiver 2 towards the signal circuit 4. In addition, the tag comprises a converter 6 associated with the receiver 2.

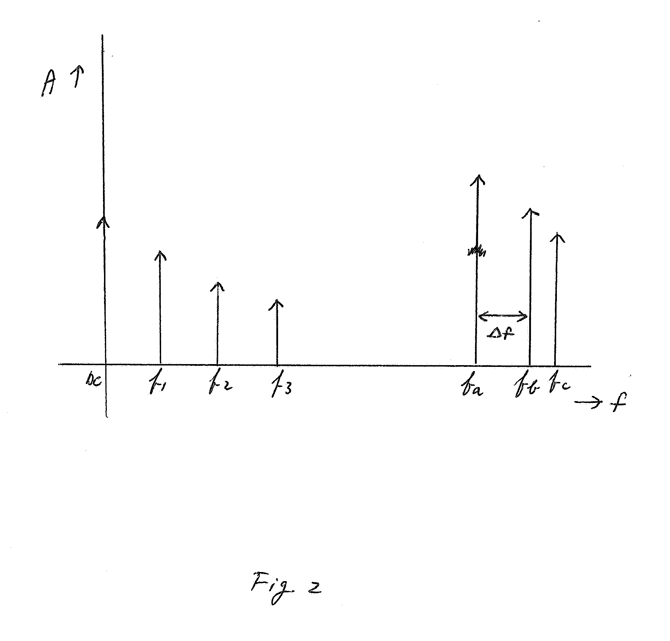

During operation of the tag 1, an incoming radio wave 3 having an amplitude spectrum provided with a first frequency fₐ component and a second frequency f_{b} component being received by the receiver 2. As an example, the first frequency fₐ is approximately 2.400 GHz and the second frequency f_{b} is 2.427 GHz, see Figure 2 showing an amplitude spectrum A of signals as a function of the frequency f. The converter 6 associated with the receiver 2 is arranged for generating a signal having a frequency component at a frequency f₁ being equal to the frequency difference Δf between the first and second frequency fₐ; f_{b}. Then, the generated signal is forwarded from the receiver 2 towards the signal circuit 4 via the coupler 5.

The receiver 2 comprises a quad antenna. The receiver 2 therefore comprises a closed loop in a substantially rectangular shape having sides with a length substantially coinciding with a quarter wavelength of the first frequency fₐ so that a resonant loop has been formed being optimized for receiving the first frequency component. The loop has been implemented as a single layer conducting structure on a dielectric substrate 7 wherein the length of the conducting patterns has been corrected for the material structure transmission characteristics. Due to the relatively high first frequency fₐ, the receiver 2 can thus be implemented in a compact way. Instead of a quad antenna, another antenna type might be employed for receiving the incoming radio waves, such as a dipole antenna.

The converter 6 associated with the receiver 2 comprises a non-linear element closing the loop of the receiver. The non-linear element can be implemented as a diode, a varistor, such as a metal-oxide varistor, a ceramic structure, a metal-insulator-metal (MIM) structure, and/or a metal-insulator-insulator-metal (MIIM) structure. In the shown embodiment in Figure 1, the non-linear element has been implemented as a single diode 6, but several combinations are possible, such as a multiple number of diodes.

By application of the non-linear element, upon receipt of the radio waves, a time averaged current flows in a particular direction in the loop 2, either clockwise or counter clockwise, wherein the amplitude of the current depends on the amplitude of the received radio waves. Since the received radio waves comprise a first frequency fₐ component and a second frequency f_{b} component, the received radio waves can be considered as a single side band amplitude modulated signal having a carrier frequency fₐ and a modulated frequency Δf being the difference between the first frequency fₐ and the second frequency f_{b}. As a result, the non-linear element acting as a multiplier generates a harmonic series of frequency components fₙ, wherein fₙ is n · Δf, n= 0, 1, 2, 3, ...Thus, in the numerical example, a 27 MHz signal is generated, as well as a 54 MHz signal, a 81 MHz, etc.

The components at the first frequency fₐ and the second frequency f_{b} can also be modulated otherwise, e.g. frequency or phase modulated. Further, dual side band amplitude modulation can be applied. In general, according to the invention, the receiver is arranged for receiving radio frequency waves having a first frequency component and a second frequency component that are not necessarily mutually modulated.

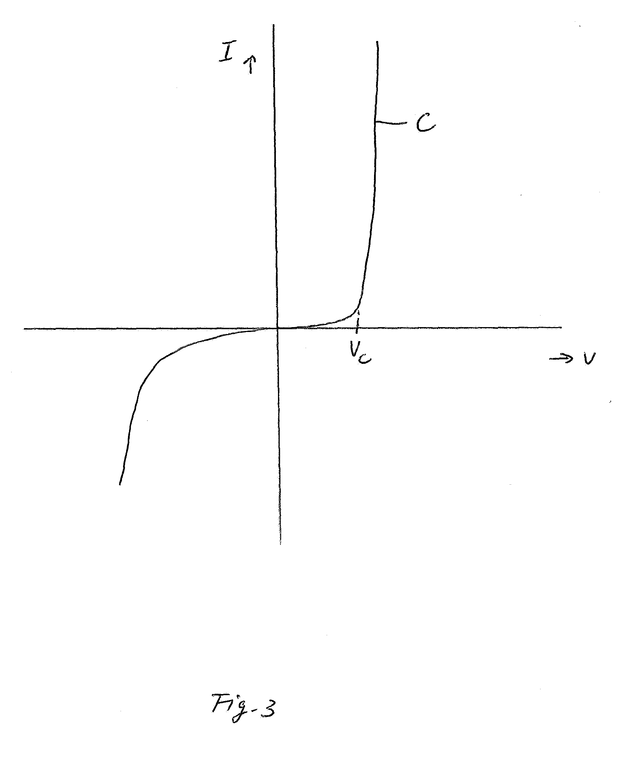

In a preferred embodiment according to the invention, the non-linear element 6 implemented as a diode having an a-symmetric voltage current characteristic, preferably having a low cut-in, also called threshold voltage V_{c}. Figure 3 shows a voltage V / current I curve C of the diode 6. Since the low cut-in voltage V_{c} is relatively low, the curve C is a-symmetric and the non-linear behaviour can apply in a regime wherein the positive part of the received radio signal exceeds the cut-in voltage V_{c} while the negative part of the received radio signal remains in the linear part of the curve C. As a result, the power of the first harmonic f₁, in the numerical example 27 MHz, is relatively large, thereby optimizing the available energy in the signal circuit 4 due to the filter function of the coupler 5 as is explained below. As a result, the signal generated by the converter is mainly the first harmonic f₁ component. In principle, however, also a non-linear element having a symmetric voltage current characteristic and/or a common or relatively high cut-in voltage V_{c} can be applied. Further, preferably, the diode is implemented as a Schottky diode, so that the non-linear behaviour is even further improved resulting in increased power of the first harmonic f₁ component. Again, it is noted that also other diode types might be employed.

In a further preferred embodiment according to the invention, the non-linear element implemented as a diode has an internal capacity being lower than approximately 1 pF at 0 V, so that the conductivity is low at relatively high frequencies generating the desired non-linear behaviour also at relatively high frequencies. However, also a non-linear element having an internal capacity being higher than approximately 1 pF at 0 V can be applied, e.g. if the frequency components of the incoming radio waves are relatively low.

The coupler 5 is arranged for inductively and/or capacitively coupling the signal circuit 4 to the receiver 2. As a result, the coupler electromagnetically forwards signals from the receiver 2 towards the signal circuit 4. Preferably, the coupler 5 also comprises a filter for filtering the generated signal, more preferably the first harmonic component, from the signals in the receiver loop 2. As a result, mainly the first harmonic component of the generated signal is forwarded to the signal circuit 4. In the embodiment shown in Figure 1, the coupler is inherently implemented by the geometry of the substrate 7 and the geometry of the receiver 2 conducting pattern and the signal circuit 4 conducting pattern. Since the conducting patterns are located partially adjacent each other, the generated signal can be forwarded from the receiver 2 towards the signal circuit 4. Alternatively or additionally, a discrete coupling element can be applied, such as a dielectric between the conducting patterns of the receiver 2 and the signal circuit 4. It is noted that, as an alternative, the coupler might also, instead of inductively and/or capacitively coupling or in addition thereto, be arranged for galvanically coupling the signal circuit 4 to the receiver 2, e.g. by implementing a conducting structure interconnecting the receiver 2 and the signal circuit 4.

The signal circuit 4 comprises a transmitter for transmitting the generated signal as a transmitted radio wave. Thereto, the transmitter is preferably optimized for transmitting radio waves at the first harmonic frequency f₁ of the generated signal, in the numerical example 27 MHz. Since in the example the first harmonic frequency f₁ is significantly lower than the first frequency fₐ of the originally received radio waves, the transmitter comprises a magnetic loop antenna 4. The magnetic loop antenna 4 comprises a resonant LC loop having a high quality factor Q. Since the dimensions of the inductive loop can be chosen relatively small compared with the wavelength, a compact transmitter can be realized. Advantageously, the area of the inductive loop is as large as possible in order to improve the quality factor Q. Further, since the bandwidth of the resonant LC loop is relatively narrow. Therefore, preferably, the condensator 8 of the LC loop is implemented with a trimmer so that the resonant loop can be matched with the first harmonic frequency f₁ of the generated signal. In a numerical example, the condensator 8 has a capacity of circa 150 pF, depending on the parasitic inductance of the condensator.

The embodiment of the radio frequency tag shown in Figure 1 has been implemented as a single layer pattern structure, so that the tag can be realized using a cheap manufacturing process. The receiver 2 and the signal circuit 4 each have a single loop thus enabling the single layer pattern structure. Other embodiments of the invention might comprise multiple layers of pattern structures, e.g. if the receiver 2 and/or the signal circuit 4 comprise multiple loops. Further, the tag 1 is implemented using transmission line technology wherein the conductive patterns are located integrally on a dielectric plate 7, such as a printed circuit board, e.g. FR4, or a polymer plate. In a practical embodiment the tag is manufactured using micro strip technology. However, the tag 1 can also be manufactured by combining discrete transmission line elements.

The generated signal can be modulated in the signal circuit 4 so that information can be coded in the radio wave transmitted from the tag 1. In order to code information, the receiver 2 and/or the signal circuit 4 is electrically connected to a sensing unit, an identification unit and/or an electric or magnetic energy storage element. The sensing unit and/or the identification unit can be implemented as a separate circuit that is connected to the receiver 2 and/or the signal circuit 4.

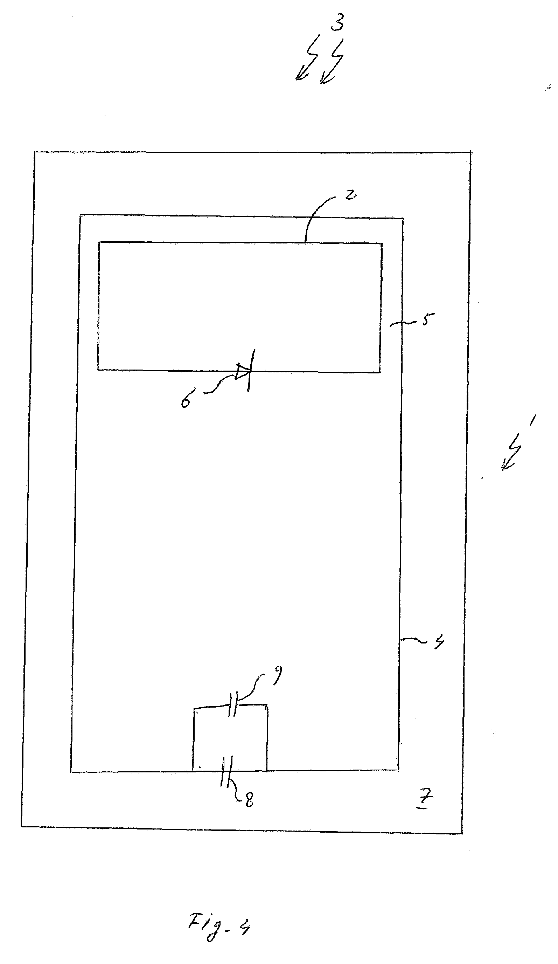

Figure 4 shows a schematic view of a second embodiment of a radio frequency tag 1 according to the invention. Here, the tag 1 comprises a separate sensing unit realized as a capacitor 9 that is connected in parallel with the condensator 8 of the resonant LC loop. The capacitor 9 has a characteristic depending on one or more physical parameters, optionally exterior to the tag, e.g. temperature, moisture degree, etc. As a result, the amplitude of the transmitted radio wave depends on said physical parameter and the tag 1 can be used as a wireless radio frequency sensor responding to an interrogation signal. Obviously, the sensing unit might comprise other components such as an inductance, impedance and/or a resistor. Further, the sensing unit might comprise active components for performing a sensing operation. In the first embodiment according to the invention, as shown in Figure 1, the capacitor 9 of the sensing unit has been integrated with the condensator 8 of the resonant LC loop, thereby saving an electric component.

The identification unit might comprise electric components that do not substantially depend on external physical parameters, but modulate the amplitude of the generated signal in a specific way for identification purposes. Further, the receiver 2 and/or the signal circuit 4 might be provided with an electric or magnetic energy storage element, e.g. connected in parallel with the non-linear element and the condensator 8. The electric or magnetic energy storage element may be used for feeding a circuit of the tag, e.g. an active sensing element.

The signal circuit 4 is arranged for processing the generated signal, e.g. by modulating the amplitude and/or by converting the signal to DC for energy storage. In this context it is noted that the signal circuit 4 can also process the generated signal otherwise, e.g. by activating a signalling device such as an optical or acoustic element that may be observed by a user of the tag 1.

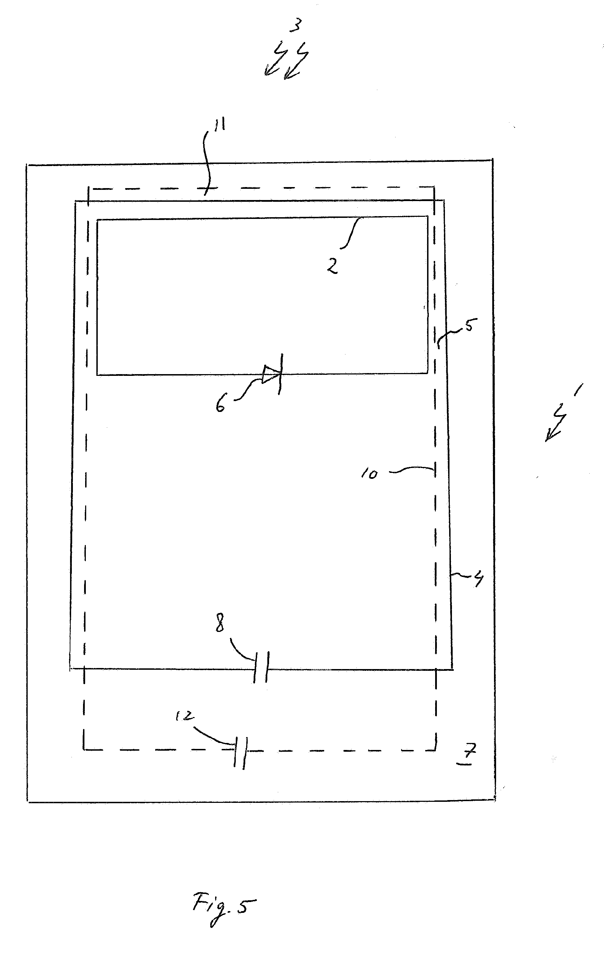

Fig. 5 shows a view of a third embodiment of a radio frequency tag 1 according to the invention. Here, the tag 1 comprises a second signal circuit 10 and a second coupler 11 for forwarding a further generated signal from the receiver 2 towards the second signal circuit 10. The second signal circuit 10 comprises a conductive pattern in a second layer behind the substrate 7 so that the further generated signal can be forwarded from the receiver 2 towards the second signal circuit 10. The second signal circuit 10 is arranged for processing the further generated signal.

The further generated signal comprises a frequency component at the frequency difference between the first frequency component fₐ and a third frequency f_{c} component in the amplitude spectrum of the radio frequency waves received by the receiver 2. In a numerical example, the first frequency is approximately 2.400 GHz and the third frequency f_{c} is 2.413 GHz. As explained under reference to the converter acting as a multiplier, a first harmonic signal is generated at the difference signal, in the numerical example at 13 MHz. The second signal circuit 10 has been matched for the first harmonic signal frequency, so that the second signal circuit 10 can transmit the second generated signal.

As a result, by choosing a specific combination of frequency components in the radio waves to be sent to the receiver, corresponding signal circuits 4, 10 can be triggered to respond, thereby activating respective functions of the tag 1. A particular desired frequency component can thus be generated in an accurate, cheap way. Also the second signal circuit can be provided with a sensor unit for sensing a physical parameter or can be provided with an identification unit and/or an electric or magnetic energy storage element.

It is noted that, according to the invention, even more signal circuits can be implemented that are coupled to the receiver. Further, the tag can be interrogated with radio frequency waves having an amplitude spectrum provided with a first frequency component and a second frequency component, wherein the second frequency component varies over time, e.g. being in a first measurement 2427.0 MHz, in a second measurement 2427.1 MHz and in a third measurement 2427.2 MHz.

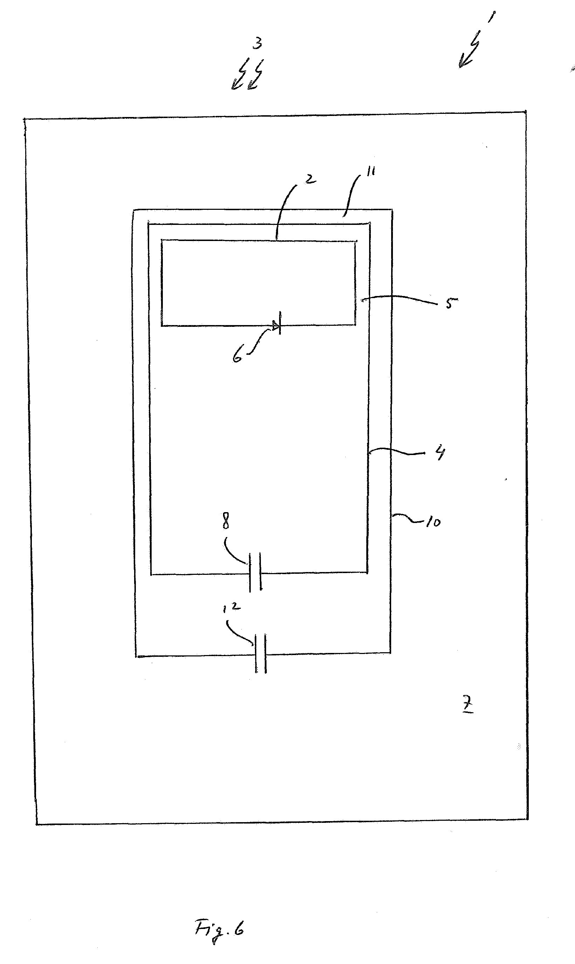

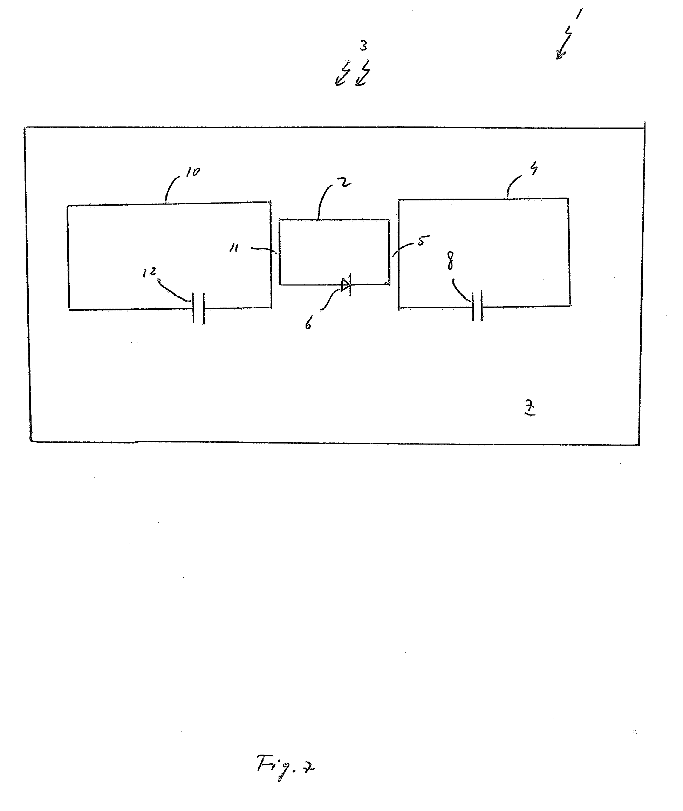

Figures 6 and 7 show a view of a fourth and fifth embodiment of a radio frequency tag 1 according to the invention. In the fourth embodiment, the second signal circuit 10 surrounds the first signal circuit 4. In the fifth embodiment, the first and second signal circuits 4, 10 are located to the right hand side and to the left hand side, respectively, of the receiver 2. Obviously, also other geometries can be implemented, e.g. comprising circular shaped loops. Further, even more signal circuits can be implemented so that a multiple number of functions can be performed by means of respective signal circuits.

The radio frequency tag 1 according to the invention can be in combination with an interrogating device, e.g. a mobile unit comprising one or a multiple number of transmitting elements for transmitting the radio frequency waves having the first frequency fₐ component and the second frequency f_{b} component. By transmitting the first and second frequency at an accurately determined frequency, also an accurate frequency of the generated frequency in the tag 1 is generated that is suitable for causing the tag 1 to respond electromagnetically, optically and/or acoustically.

The tag 1 according to the invention can be used for several applications, e.g. for wireless sensing physical parameters, such as moisture, electrical conductivity, pressure and/or temperature in soil. Therefore, the tag 1 is suitable in the area of cultivation of flowers and plants.

The invention is not restricted to the embodiments described herein. It will be understood that many variants are possible.

Instead of using frequency components at numerical values mentioned above, also other frequency components can be used, e.g. in the GHz range or in the MHz range.

Further, in the mentioned numerical values of frequencies, the relative difference between a first frequency fₐ on the one hand and a second frequency f_{b} or a third frequency f_{c} on the other hand is in the order of circa 1%. In principle, however, the relative frequency difference may be chosen otherwise, e.g. in the order of circa 1 per mille or in the order of circa 10%. In designing the radio frequency tag according to the invention, the relative frequency difference may be arbitrary.

Other such variants will be obvious for the person skilled in the art and are considered to lie within the scope of the invention as formulated in the following claims.

## Claims

1. A radio frequency tag, comprising
- a receiver for receiving radio frequency waves having an amplitude spectrum provided with a first frequency component and a second frequency component;
- a converter associated with the receiver for generating a signal having a frequency component at the frequency difference between the first frequency and the second frequency;
- a signal circuit for processing the generated signal; and
- a coupler for forwarding the generated signal from the receiver towards the signal circuit.

2. A radio frequency tag according to claim 1, wherein the receiver comprises a quad antenna.

3. A radio frequency tag according to claim 1 or 2, wherein the signal circuit comprises a transmitter for transmitting the generated signal as a transmitted radio wave.

4. A radio frequency tag according to any of the previous claims, wherein the transmitter comprises a magnetic loop antenna.

5. A radio frequency tag according to any of the previous claims, wherein the tag is implemented as a single layer pattern structure.

6. A radio frequency tag according to any of the previous claims, wherein the receiver and/or the signal circuit comprises a single loop.

7. A radio frequency tag according to any of the previous claims, wherein the converter comprises a non-linear element closing a loop of the receiver.

8. A radio frequency tag according to any of the previous claims, wherein the non-linear element comprises a diode having a low cut-in voltage.

9. A radio frequency tag according to any of the previous claims, wherein the non-linear element comprises a diode having an internal capacity being lower than approximately 1 pF at 0 V.

10. A radio frequency tag according to any of the previous claims, wherein the non-linear element comprises a diode having an a-symmetric voltage current characteristic.

11. A radio frequency tag according to any of the previous claims, wherein the receiver and/or the signal circuit is electrically connected to a sensing unit, an identification unit and/or an electric or magnetic energy store element.

12. A radio frequency tag according to any of the previous claims, wherein the coupler is arranged for inductively and/or capacitively coupling the signal circuit to the receiver.

13. A radio frequency tag according to any of the previous claims, wherein the tag is implemented using transmission line technology.

14. A radio frequency tag according to any of the previous claims, comprising
- a second signal circuit for processing a further generated signal at the frequency difference between the first frequency and a third frequency of respective components in the amplitude spectrum of the radio frequency waves received by the receiver, and
- a second coupler for forwarding the further generated signal from the receiver towards the second signal circuit.

15. A radio frequency tag according to any of the previous claims, wherein the relative frequency difference between the first frequency component and the second frequency component is in the order of circa 1%.
